# EUROPEAN PATENT APPLICATION

(11) **EP 3 009 532 A1**
(43) Date of publication of application: **20.04.2016**
(21) Application number: 15003342.1
(22) Date of filing: 08.06.2010
(51) Int. Cl.: C25D 5/10, C25D 5/20, C25D 15/00, C25D 5/18, C25D 5/14

(54) **ELECTRODEPOSITED NANOLAMINATE COATINGS AND CLADDINGS FOR CORROSION PROTECTION**

(30) Priority: 08.06.2009 US 185020 P
(62) Divisional of application: 10728060.4
(71) Applicant: Modumetal, Inc., Seattle, WA 98101-3099 (US)
(72) Inventor: Lomasney, Christina, Seattle, WA 98105 (US)
(74) Representative: Bösl, Raphael Konrad

(57) **Abstract**

Described herein are electrodeposited corrosion-resistant multilayer coating and claddings that comprises multiple nanoscale layers that periodically vary in electrodeposited species or electrodeposited microstructures. The coatings may comprise electrodeposited metals, ceramics, polymers or combinations thereof. Also described herein are methods for preparation of the coatings and claddings.

## Description

This application claims the benefit of U.S. Provisional Application No. 61/185,020, filed June 8, 2009, tilted Electrodeposited, Nanolaminate Coatings and Claddings for Corrosion Protection, incorporates herein by reference in its entirety.

### BACKGROUND

Laminated metals, and in particular nanolaminated metals, are of interest for structural and thermal applications because of their unique toughness, fatigue resistance and thermal stability. For corrosion protection, however, relatively little success has been reported in the formation of corrosion-resistant coatings that are laminated on the nanoscale.

Electrodeposition has been successfully used to deposit nanolaminated coatings on metal and alloy components for a variety of engineering applications. Electrodeposition is recognized as a low-cost method for forming a dense coating on any conductive substrate. Electrodeposition has been demonstrated as a viable means for producing nanolaminated coatings, in which the individual laminates may vary in the composition of the metal, ceramic or organic-metal composition or other microstructure feature. By time varying electrodeposition parameters such as current density, bath composition, pH, mixing rate, and/or temperature, multi-laminate materials can be produced in a single bath. Alternately by moving a mandrel or substrate from one bath to another, each of which represents a different combination of parameters that are held constant, multi-laminate materials or coatings can be realized.

The corrosion behavior of organic, ceramic, metal and metal-containing coatings depends primarily on their chemistry, microstructure, adhesion, thickness and galvanic interaction with the substrate to which they are applied. In the case of sacrificial metal or metal-containing coatings, such as zinc on an iron-based substrate, the coating is less electronegative than the substrate and so oxidation of the coating occurs preferentially, thus protecting the substrate. Because these coatings protect by providing an oxidation-preferred sacrificial layer, they will continue to work even when marred or scratched. The performance of sacrificial coatings depends heavily on the rate of oxidation of the coating layer and the thickness of the sacrificial layer. Corrosion protection of the substrate only lasts so long as the sacrificial coating is in place and may vary depending on the environment that the coating is subjected to and the resulting rate of coating oxidation.

Alternately, in the case of a barrier coating, such as nickel on an iron-based substrate, the coating is more electronegative than the substrate and thus works by creating a barrier to oxidative corrosion. In A-type metals, such as Fe, Ni, Cr and Zn, it is generally true that the higher the electronegativity, the greater the nobility (non reactivity). When the coating is more noble than the substrate, if that coating is marred or scratched in any way, or if coverage is not complete, these coatings will not work, and may accelerate the progress of substrate corrosion at the substrate: coating interface, resulting in preferential attack of the substrate. This is also true when ceramic coatings are used. For example, it has been reported in the prior art that while fully dense TiN coatings are more noble than steel and aluminum in resistance to various corrosive environments, pinholes and micropores that can occur during processing of these coating are detrimental to their corrosion resistance properties. In the case of barrier coatings, pinholes in the coating may accelerate corrosion in the underlying metal by pitting, crevice or galvanic corrosion mechanisms.

Many approaches have been utilized to improve the corrosion resistance of barrier coatings, such as reducing pinhole defects through the use of a metallic intermediate layer or multiple layering schemes. Such approaches are generally targeted at reducing the probability of defects or reducing the susceptibility to failure in the case of a defect, mar or scratch. One example of a multiple layering scheme is the practice commonly found in the deployment of industrial coatings, which involves the use of a primer, containing a sacrificial metal such as zinc, coupled with a highly-crosslinked, low surface energy topcoat (such as a fluorinated or polyurethane topcoat). In such case, the topcoat acts as a barrier to corrosion. In case the integrity of the topcoat is compromised for any reason, the metal contained in the primer acts as a sacrificial media, thus sacrificially protecting the substrate from corrosion.

Dezincification is a term is used to mean the corroding away of one constituent of any alloy leaving the others more or less in situ. This phenomenon is perhaps most common in brasses containing high percentages of zinc, but the same or parallel phenomena are familiar in the corrosion of aluminum bronzes and other alloys of metals of widely different chemical affinities. Dezincification usually becomes evident as an area with well-defined boundaries, and within which the more noble metal becomes concentrated as compared with the original alloy. In the case of brass the zinc is often almost completely removed and copper is present almost in a pure state, but in a very weak mechanical condition. Corrosion by dezincification usually depends on the galvanic differential between the dissimilar metals and the environmental conditions contributing to corrosion. Dezincification of alloys results in overall loss of the structural integrity of the alloy and is considered one of the most aggressive forms of corrosion.

Coatings that may represent the best of both the sacrificial coating and the barrier coating are those that are more noble than the substrate and creates a barrier to corrosion, but, in case that coating is compromised, is also less noble than the substrate and will sacrificially corrode, thus protecting the substrate from direct attack.

### SUMMARY OF THE INVENTION

In one embodiment of the technology described herein, the phenomena observed in dezincification of alloys is leveraged to enable corrosion resistant coatings that are both more and less noble than the substrate, and which protect the substrate by acting both as a barrier and as a sacrificial coating. Other embodiments and advantages of this technology will become apparent upon consideration of the following description.

The technology described herein includes in one embodiment an electrodeposited, corrosion-resistant multilayer coating or cladding, which comprises multiple nanoscale layers that periodically vary in electrodeposited species or electrodeposited microstructures (electrodeposited species microstructures), wherein variations in said layers of said electrodeposited species or electrodeposited species microstructure result in galvanic interactions between the layers, said nanoscale layers having interfaces there between.

The technology described herein also provides an electrodeposition method for producing a corrosion resistant multilayer coating or cladding comprising the steps of:
a) placing a mandrel or a substrate to be coated in a first electrolyte containing one or more metal ions, ceramic particles, polymer particles, or a combination thereof; and
b) applying electric current and varying in time one or more of: the amplitude of the electrical current, electrolyte temperature, electrolyte additive concentration, or electrolyte agitation, in order to produce periodic layers of electrodeposited species or periodic layer of electrodeposited species microstructures; and
c) growing a multilayer coating under such conditions until the desired thickness of the multilayer coating is achieved.

Such a method may further comprising after step (c), step (d), which comprises removing the mandrel or the substrate from the bath and rinsing.

The technology described herein further provides an electrodeposition method for producing a corrosion resistant multilayer coating or cladding comprising the steps of:
a) placing a mandrel or substrate to be coated in a first electrolyte containing one or more metal ions, ceramic particles, polymer particles, or a combination thereof; and
b) applying electric current and varying in time one or more of: the electrical current, electrolyte temperature, electrolyte additive concentration, or electrolyte agitation, in order to produce periodic layers of electrodeposited species or periodic layer of electrodeposited species microstructures; and
c) growing a nanometer-thickness layer under such conditions; and
d) placing said mandrel or substrate to be coated in a second electrolyte containing one or more metal ions that is different from said first electrolyte, said second electrolyte containing metal ions, ceramic particles, polymer particles, or a combination thereof; and
e) repeating steps (a) through (d) until the desired thickness of the multilayer coating is achieved;
wherein steps (a) through (d) are repeated at least two times. Such a method may further comprising after step (e), step (f) which comprises removing the mandrel or the coated substrate from the bath and rinsing.

Also described herein is an electrodeposited, corrosion-resistant multilayer coating or cladding, which comprises multiple nanoscale layers that vary in electrodeposited species microstructure, which layer variations result in galvanic interactions occurring between the layers. Also described is a corrosion-resistant multilayer coating or cladding, which comprises multiple nanoscale layers that vary in electrodeposited species, which layer variations result in galvanic interactions occurring between the layers.

The coating and claddings described herein are resistant to corrosion due to oxidation, reduction, stress, dissolution, dezincification, acid, base, or sulfidation and the like.

### BRIEF DESCRIPTION OF THE DRAWINGS

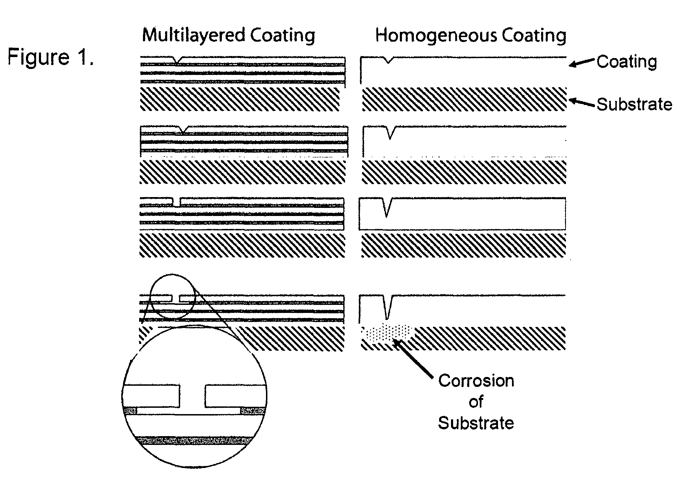

Figure 1 shows a schematic of a substrate having the "Multilayered Coating" of a preferred embodiment (on the left of Figure 1) and a schematic of a substrate having a "Homogeneous Coating" as is known in the art (on the right of Figure 1). Both the left and right side schematics represent how a pinhole, a micropore or damage to a coating changes over time (in sequence from the top to the bottom of Figure 1) relative to the substrate shown on the bottom of each of the sequences. The schematic illustrates a few representative layers that are not to scale with the substrate. In typical embodiments coating layers are on the nanoscale and present in a greater number than shown in Fig. 1.

### DETAILED DESCRIPTION

In one embodiment an electrodeposited corrosion-resistant multilayer coating comprised of individual layers with thicknesses on the nanometer scale is provided. In such an embodiment the individual layers can differ in electronegativity from adjacent layers.

In other embodiments, the present technology provides corrosion-resistant multilayer coatings or claddings (together herein referred to as a "coating") that comprise multiple nanoscale layers having variations in the composition of metal, alloy, polymer, or ceramic components, or combination thereof (together herein referred to as "electrodeposited species").

In such embodiments the variations in the compositions between layers results in galvanic interactions occurring between the layers.

In another embodiment, the present technology provides a corrosion-resistant multilayer coating that comprises multiple nanoscale layers having layer variations in grain size, crystal orientation, grain boundary geometry, or combination thereof (together herein referred to as "electrodeposited species microstructure(s)"), which layer variations result in galvanic interactions occurring between the layers.

In another embodiment multilayer coating or cladding is provided for, in which the layers vary in electronegativity or in nobility, and in which the rate of corrosion can be controlled by controlling the difference in electronegativity or in the reactivity (or "nobility") of adjacent layers.

One embodiment of the present technology provides a multilayer coating or cladding in which one of the periodic layers is less noble than the other layer and is less noble than the substrate, thus establishing a periodic sacrificial layer in the multilayer coating.

As used herein "layers that periodically vary" means a series of two or more non-identical layers (non identical "periodic layers") that are repeatedly applied over an underlying surface or mandrel. The series of non-identical layers can include a simple alternating pattern of two or more non-identical layers (e.g., layer 1, layer 2, layer 1, layer 2, etc.) or in another embodiment may include three or more non-identical layers (e.g., layer 1, layer 2, layer 3, layer 1, layer 2, layer 3, etc.). More complex alternating patterns can involve two, three, four, five or more layers arranged in constant or varying sequences (e.g., layer 1, layer 2, layer 3, layer 2, layer 1, layer 2, layer 3, layer 2, layer 1, etc.). In one embodiment, a series of two layers is alternately applied 100 times to provide a total of 200 layers having 100 periodic layers of a first type alternated with 100 periodic layers of a second type, wherein the first and second type of periodic layer are not identical. In other embodiments, "layers that periodically vary" include 2 or more, 3 or more, 4 or more, or 5 or more layers that are repeatedly applied about 5, 10, 20, 50, 100, 200, 250, 500, 750, 1,000, 1,250, 1,500, 1,750, 2,000, 3,000, 4,000, 5,000, 7,500, 10,000, 15,000, 20,000 or more times.

As used herein, a "periodic layer" is an individual layer within "layers that periodically vary".

In another embodiment, the present technology provides a multilayer coating or cladding in which one of the periodic layers is more noble than the other layer and is more noble than the substrate, thus establishing a periodic corrosion barrier layer in the multilayer coating.

In another embodiment, the present technology provides a multilayer coating in which one of the periodic layers is less noble than the adjacent layers and all layers are less noble than the substrate.

In still another embodiment, the present technology provides a multilayer coating or cladding in which one of the periodic layers is more noble than the adjacent layers and all layers are more noble than the substrate.

One embodiment of the present technology provides for a corrosion-resistant multilayer coating or cladding compositions that comprise individual layers, where the layers are not discrete, but rather exhibit diffuse interfaces with adjacent layers. In some embodiments the diffuse region between layers may be 0.5, 0.7, 1, 2, 5, 10, 15, 20, 25, 30, 40, 50 75, 100, 200, 400, 500, 1,000, 2,000, 4,000, 6,000, 8,000 or 10,000 nanometers. In other embodiments the diffuse region between layers may be 1 to 5, or 5 to 25, or 25 to 100, or 100 to 500, or 500 to 1,000, or 1,000 to 2,000, or 2,000 to 5,000, or 4,000 to 10,000 nanometers. The thickness of the diffuse interface may be controlled in a variety of ways, including the rate at which the electrodeposition conditions are change.

Another embodiment of the technology described herein provides a method for producing a multilayered corrosion-resistant coating that comprises multiple nanoscale layers ("nanolaminates") that vary in electrodeposited species or electrodeposited species microstructure or a combination thereof, which layers are produced by an electrodeposition process.

Where variations in electrodeposited species or combinations thereof are employed, in some embodiments, the electrodeposited species may comprise one or more of Ni, Zn, Fe, Cu, Au, Ag, Pd, Sn, Mn, Co, Pb, Al, Ti, Mg and Cr, Al₂O₃, SiO₂, TiN, BoN, Fe₂O₃, MgO, and TiO₂, epoxy, polyurethane, polyaniline, polyethylene, poly ether ether ketone, polypropylene.

In other embodiments the electrodeposited species may comprise one or more metals selected from Ni, Zn, Fe, Cu, Au, Ag, Pd, Sn, Mn, Co, Pb, Al, Ti, Mg and Cr. Alternatively, the metals may be selected from: Ni, Zn, Fe, Cu, Sn, Mn, Co, Pb, Al, Ti, Mg and Cr; or from Ni, Zn, Fe, Cu, Sn, Mn, Co, Ti, Mg and Cr; or from Ni, Zn, Fe, Sn, and Cr. The metal may be present in any percentage. In such embodiments the percentage of each metal may independently selected about 0.001, 0.005, 0.01, 0.05, 0.1, 0.5, 1, 5, 10, 15, 20, 25, 30, 30, 35, 40, 45, 50, 55, 60, 65, 70, 75, 80, 85, 90, 95, 98, 99, 99.9, 99.99, 99.999 or 100 percent of the electrodeposited species.

In other embodiments the electrodeposited species may comprise one or more ceramics (e.g., metals oxides or metal nitrides) selected from Al₂O₃, SiO₂, TiN, BoN, Fe₂O₃, MgO, SiC, ZrC, CrC, diamond particulates, and TiO₂. In such embodiments the percentage of each ceramic may independently selected about 0.001, 0.005, 0.01, 0.05, 0.1, 0.5, 1, 5, 10, 15, 20, 25, 30, 30, 35, 40, 45, 50, 55, 60, 65, 70, 75, 80, 85, 90, 95, 98, 99, 99.9, 99.99, 99.999 or 100 percent of the electrodeposited species.

In still other embodiments the electrodeposited species may comprise one or more polymers selected from epoxy, polyurethane, polyaniline, polyethylene, poly ether ether ketone, polypropylene, and poly(3,4-ethylenedioxythiophene) poly(styrenesulfonate). In such embodiments the percentage of each polymer may independently selected about 0.001, 0.005, 0.01, 0.05, 0.1, 0.5, 1, 5, 10, 15, 20, 25, 30, 30, 35, 40, 45, 50, 55, 60, 65, 70, 75, 80, 85, 90, 95, 98, 99, 99.9, 99.99, 99.999 or 100 percent of the electrodeposited species.

Another embodiment of the present technology provides a electrodeposition method for producing a nanolaminated, corrosion resistant coating which reduces through-hole defects in the overall corrosion resistant coating. Such methods include those wherein multi-layered coatings or claddings are applied to a substrate or mandrel as illustrated in Figure 1.

As shown on the left of Figure 1, the multilayer coating of a preferred embodiment is disposed to have two alternating (light and dark) layers covering a substrate. In the embodiment of the left side of Figure 1, the light layer is a protective layer and the dark layer is a sacrificial layer. As the sequence shows, over time the hole in the light layer expands slightly in a direction parallel to the surface of the substrate, and the sacrificial dark layer under the damaged light layer is consumed in a direction parallel with the surface of the substrate. It is also noted that the hole in the outermost (exposed) layer of the multilayer coating does not expand to breach the second light layer disposed between the hole and the substrate, thereby protecting the substrate from corrosion. In a preferred embodiment, corrosion is confined to the less-noble layers (the dark layers), with the layers being protected cathodically and the corrosion proceeding laterally rather than towards the substrate.

As shown on the right of Figure 1, the homogeneous coating of the prior art is disposed to have a single layer covering a substrate. As the sequence shows, over time the hole in the single layer expands in a direction normal to the surface of the substrate until ultimately reaching the substrate, which thereafter is affected by corrosion or other forms of degradation.

In one embodiment, the technology described herein describes a method for producing a multilayer, nanolaminated coating by an electrodeposition process carried out in a single bath, comprising the steps of:
a) placing a mandrel or a substrate to be coated in a first electrolyte containing one or more metal ions, ceramic particles, polymer particles, or a combination thereof; and
b) applying electric current and varying in time one or more of: the amplitude of the electrical current, electrolyte temperature, electrolyte additive concentration, or electrolyte agitation, in order to produce periodic layers of electrodeposited species or periodic layer of electrodeposited species microstructures; and
c) growing a multilayer coating under such conditions until the desired thickness of the multilayer coating is achieved.

Such a method may further comprise after step (c), step (d) removing the mandrel or the substrate from the bath and rinsing.

The technology described herein also sets forth a method for producing a multilayer, nanolaminated coating or cladding using serial electrodeposition in two or more baths comprising the steps of:
a) placing a mandrel or substrate to be coated in a first electrolyte containing one or more metal ions, ceramic particles, polymer particles, or a combination thereof; and
b) applying electric current and varying in time one or more of: the electrical current, electrolyte temperature, electrolyte additive concentration, or electrolyte agitation, in order to produce periodic layers of electrodeposited species or periodic layer of electrodeposited species microstructures; and
c) growing a nanometer-thickness layer under such conditions; and
d) placing said mandrel or substrate to be coated in a second electrolyte containing one or more metal ions that is different from said first electrolyte, said second electrolyte containing metal ions, ceramic particles, polymer particles, or a combination thereof; and
e) repeating steps (a) through (d) until the desired thickness of the multilayer coating is achieved; wherein steps (a) through (d) are repeated at least two times.

Such a method may further comprise after step (e), step (f) removing the mandrel or the coated substrate from the bath and rinsing.

Corrosion-resistant multilayer coatings can be produced on a mandrel, instead of directly on a substrate to make a free-standing material or cladding. Cladding produced in this manner may be attached to the substrate by other means, including welding, gluing or through the use of other adhesive materials.

The multilayer coatings can comprise layers of metals that are electrolytically deposited from aqueous solution, such as Ni, Zn, Fe, Cu, Au, Ag, Pd, Sn, Mn, Co, Pb and Cr. The multilayer coating can also comprise alloys of these metals, including, but not limited to: ZnFe, ZnCu, ZnCo, NiZn, NiMn, NiFe, NiCo, NiFeCo, CoFe, CoMn. The multilayer can also comprise metals that are electrolytically deposited from a molten salt or ionic liquid solution. These include those metals previously listed, and others, including, but not limited to Al, Mg, Ti and Na. In other embodiments multilayer coatings can comprise one or more metals selected from Ni, Zn, Fe, Cu, Au, Ag, Pd, Sn, Mn, Co, Pb, Al, Ti, Mg and Cr. Alternatively, one or more metals to be electrolytically deposited may be selected from: Ni, Zn, Fe, Cu, Sn, Mn, Co, Pb, Al, Ti, Mg and Cr; or from Ni, Zn, Fe, Cu, Sn, Mn, Co, Ti, Mg and Cr; or from Ni, Zn, Fe, Sn, and Cr.

The multilayer coating can comprise ceramics and polymers that are electrophoretically deposited for aqueous or ionic liquid solutions, including, but not limited to Al₂O₃, SiO₂, TiN, BoN, Fe₂O₃, MgO, and TiO₂. Suitable polymers include, but are not limited to, epoxy, polyurethane, polyaniline, polyethylene, poly ether ether ketone, polypropylene.

The multilayer coating can also comprise combinations of metals and ceramics, metals and polymers, such as the above-mentioned metals, ceramics and polymers.

The thickness of the individual layers (nanoscale layers) can vary greatly as for example between 0.5 and 10,000 nanometers, and in some embodiments is about 200 nanometers per layer. The thickness of the individual layers (nanoscale layers) may also be about 0.5, 0.7, 1, 2, 5, 10, 15, 20, 25, 30, 40, 50 75, 100, 200, 400, 500, 1,000, 2,000, 4,000, 6,000, 8,000 or 10,000 nanometers. In other embodiments the layers may be about 0.5 to 1, or 1 to 5, or 5 to 25, or 25 to 100, or 100 to 300, or 100 to 400, or 500 to 1,000, or 1,000 to 2,000, or 2,000 to 5,000, or 4,000 to 10,000 nanometers.

Individual layers may be of the same thickness or different thickness. Layers that vary periodically may also vary in thickness.

The overall thickness of the coating or cladding can vary greatly as, for example, between 2 micron and 6.5 millimeters or more. In some embodiments the overall thickness of the coating or cladding can also be between 2 nanometers and 10,000 nanometers, 4 nanometers and 400 nanometers, 50 nanometers and 500 nanometers, 100 nanometers and 1,000 nanometers, 1 micron to 10 microns, 5 microns to 50 microns, 20 microns to 200 microns, 200 microns to 2 millimeters (mm), 400 microns to 4 mm, 200 microns to 5 mm, 1 mm to 6.5 mm, 5 mm to 12.5 mm, 10 mm to 20 mm, 15 mm to 30 mm.

Layer thickness can be controlled by, among other things, the application of current in the electrodeposition process. This technique involves the application of current to the substrate or mandrel to cause the formation of the coating or cladding on the substrate or mandrel. The current can be applied continuously or, more preferably, according to a predetermined pattern such as a waveform. In particular, the waveform (e.g., sine waves, square waves, sawtooth waves, or triangle waves) can be applied intermittently to promote the electrodeposition process, to intermittently reverse the electrodeposition process, to increase or decrease the rate of deposition, to alter the composition of the material being deposited, or to provide for a combination of such techniques to achieve a specific layer thickness or a specific pattern of differing layers. The current density and the period of the wave forms may be varied independently. In some embodiments current density may be continuously or discretely varied with the range between 0.5 and 2000 mA/cm². Other ranges for current densities are also possible, for example, a current density may be varied within the range between: about 1 and 20 mA/cm²; about 5 and 50 mA/cm²; about 30 and 70 mA/cm²; 0.5 and 500 mA/cm²; 100 and 2000 mA/cm ² greater than about 500 mA/cm²; and about 15 and 40 mA/cm² base on the surface area of the substrate or mandrel to be coated. In some embodiments the frequency of the wave forms may be from about 0.01 Hz to about 50 Hz. In other embodiments the frequency can be from: about 0.5 to about 10 Hz; 0.02 to about 1Hz or from about 2 to 20Hz; or from about 1 to about 5 Hz.

The multilayer coatings and claddings described herein are suitable for coating or cladding a variety of substrates that are susceptible to corrosion. In one embodiment the substrates are particularly suited for coating substrates made of materials that can corrode such as iron, steel, aluminum, nickel, cobalt, iron, manganese, copper, titanium, alloys thereof, reinforced composites and the like.

The coatings and claddings described herein may be employed to protect against numerous types of corrosion, including, but not limited to corrosion caused by oxidation, reduction, stress (stress corrosion), dissolution, dezincification, acid, base, sulfidation and the like.

### EXAMPLE #1

Preparation of a multilayer coating comprising nanoscale layers of zinc-iron alloy, in which the concentration of iron varies in adjacent layers.

A zinc-iron bath is produced using a commercial plating bath formula supplied by MacDermid Inc. (Waterbury, CT). The composition of the bath is described in Table 1.

**Table 1. Example Plating Bath**

| **MacDermid Material** | **Composition** | **Product #** |
|---|---|---|
| Zinc Metal | 10-12 g/l | 118326 |
| NaOH | 125-135 g/l | |
| Enviralloy Carrier | 0.5-0.6% | 174384 |
| Enviralloy Brightener | 0-0.1% | 174383 |
| Enviralloy Fe | 0.2-0.4% | 174385 |
| Enviralloy C | 4-6% | 174386 |
| Enviralloy B | 0.4-0.6% | 174399 |
| Enviralloy Stabilizer | 0.1-0.2% | 174387 |
| Envirowetter | 0.05-0.2% | 174371 |

A steel panel is immersed into the bath and connected to a power supply. The power supply was combined with a computer generated waveform supply that provided a square waveform which alternates between 25mA/cm² (for 17.14 seconds) and 15mA/cm² (for 9.52 seconds). The total plating time for a M90 coating (0.9 oz of coating per square foot) is about 1.2 hrs. In this time approximately 325 layers were deposited to achieve a total thickness of 19µm. The individual layer thickness was between 50 and 100nm.

The coating is tested in a corrosive environment, in accordance with ASTM B117 (Standard Practice for Operating Salt Spray), and shows no evidence of red rust after 300 hours of exposure.

### EXAMPLE #2

Nickel Cobalt alloys have been used extensively in recent history because of its great wear and corrosion resistance. A nanolaminated Ni-Co alloy was created which contains codeposited diamond particles. The Ni-Co alloy by itself is a corrosion and wear resistant alloy. By modulating the electrode potential in the cell, it was possible to laminate the composition of the alloy. By doing this, a galvanic potential difference was established between the layers and thus created a more favorable situation for corrosion and fatigue wear. Also, two unique phases in the crystal structure of the matrix were established. The deposition rate of the diamonds has also been shown to vary with the current density of the cell.

Preparation of a multilayer coating comprising nanoscale layers of a Nickel-Cobalt alloy with diamond codeposition, in which the concentration of the metals vary in adjacent layers.

A traditional Nickel watts bath is used as the basis for the bath. The following table describes all of the components of the bath.

**Table 2. Example Plating Bath**

| **Component** | **Concentration** |
|---|---|
| Nickel Sulfate | 250g/l |
| Nickel Chloride | 30g/l |
| Boric Acid | 40g/l |
| Cobalt Chloride | 10g/l |
| SDS | .01 g/l |
| Diamond (<1 micron size) | 5g/l |

For creating samples, a steel panel is immersed into the bath and is connected to a power supply. The current density modulation was carried out between 10 mA/cm² and 35 mA/cm² with computer controlled software to form nanoscale layers. The current is applied and varied until a 20 µm thick coating had been formed on the substrate surface.

Testing for this coating has been carried out in a salf fog chamber in accordance with the ASTM B 117 standers as well as taber wear tests which show the abrasion resistance to be significantly better than homogeneous coatings of Nickel-Cobalt and of stainless steel 316.

### EXAMPLE #3

Preparation of a Ni-Zr-Cr alloy system containing particulate precursors.

**Table 3. Bath Make-up**

| Chemical | Conc. (g/L) |
|---|---|
| Nickel Sulfate | 312 |
| Nickel Chloride | 45 |
| Boric Acid | 38 |
| Surfactant (C-TAB^{®}) | 0.1 |

**Table 4. Particle Additions**

| Particle | Conc. (g/L) |
|---|---|
| Zirconium (1-3 microns) | 40 |
| CrC (1-5 microns) | 15 |

### Bath Make-up Procedure:

1. Mix metal salts, boric acid and C-Tab at 100°F
2. Allow full dissolution, then shift pH to between 5 and 6 with ammonium hydroxide
3. Add particles and allow full mixing
4. Particles should be allowed to mix for one day before plating to allow full surfactant coverage

### Plating Procedure:

1. Substrates should be prepared in accordance with ASTM standards
2. Electrolyte should be held between 100°F and 120°F
3. Solution should have sufficient agitation to prevent particle settling, and fluid flow should be even across the substrate
4. A 50% duty cycle pulse waveform at 75mA/cm² effective current density is applied; the average current density of the pulse waveform can be varied and will vary particle inclusion allowing for a laminated structure with controllable deposit composition.

In a first SEM image of the plated substrates shows a high density particle incorporation of zirconium and chromium carbide particles on a steel substrate. Particle spacing is between <1 and 5 microns and the deposit is fully dense. Particles show relatively even distribution throughout the deposit. A second SEM image shows low particle density inclusions on a steel substrate. Particle spacing is between 1 and 15 microns, with some deposit cleaving at particle/matrix interface. Even particle distribution is less pronounced in the second SEM image. Minor surface roughness is seen in both deposits.

### Optional Heat Treatment:

In the event the coating requires greater corrosion resistance, a heat treatment can be applied to diffuse included zirconium throughout the deposit, creating, in this case, corrosion-resistant intermetallic phases of the Ni Cr and Zr. Heat treatment may be performed by:
1. Clean the part and dry;
2. Using a furnace of any atmosphere, heat the deposit at no more than 10°C/min up to 927°C
3. Hold at 927°C for 2 hours and
4. Air cooling the part.

The above descriptions of exemplary embodiments of methods for forming nanolaminate structures are illustrative of the present invention. Because of variations which will be apparent to those skilled in the art, however, the present invention is not intended to be limited to the particular embodiments described above. The scope of the invention is defined in the following

The following pages 15 to 29 contain specific embodiments.
1. An electrodeposited, corrosion-resistant multilayer coating or cladding, comprising:
   multiple nanoscale layers that periodically vary in electrodeposited species or electrodeposited species microstructures, wherein variations in said layers of said electrodeposited species or electrodeposited species microstructure result in galvanic interactions between the layers, said multiple nanoscale layers having interfaces between the nanoscale layers.
2. The multilayer coating or cladding of 1, wherein the galvanic interactions between the layers is the result of a difference in electronegativity of adjacent layers.
3. The multilayer coating or cladding of 1, wherein the galvanic interactions between the layers is the result of a difference in nobility of adjacent layers.
4. The multilayer coating or cladding of 1, wherein the galvanic interactions between the layers is the result of a difference in alloy composition of adjacent layers.
5. The multilayer coating or cladding of 3, wherein one of the layers that periodically vary is less noble than another layer that periodically varies and is less noble than an underlying substrate.
6. The multilayer coating or cladding of 3, wherein one of the layers that periodically vary is more noble than the other and is more noble than an underlying substrate.
7. The multilayer coating or cladding of 5, wherein all of the layers that periodically vary are less noble than the substrate.
8. The multilayer coating or cladding of 6, wherein all of the layers that periodically vary are more noble than the substrate.
9. The multilayer coating or cladding of 5 or 6, wherein one of the periodic layers is more noble than the substrate and another of the period layers is less noble than the substrate.
10. The multilayer coating or cladding of any of 1 to 9, wherein one or more interfaces between a periodic layer and an adjacent layer are discrete interfaces.
11. The multilayer coating or cladding of any of 1 to 9, wherein one or more interfaces between a periodic layer and an adjacent layer are diffuse interfaces.
12. The multilayer coating or cladding of any of 1 to 9, wherein one or more of the interfaces between a periodic layer and an adjacent layer are diffuse interfaces and one or more of the interfaces between a periodic layer and an adjacent layer are discrete interfaces.
13. The multilayer coating or cladding of any of 1 to 12, wherein the electrodeposited species comprises one or more of Ni, Zn, Fe, Cu, Au, Ag, Pd, Sn, Mn, Co, Pb, Al, Ti, Mg, and Cr.
14. The multilayer coating or cladding of any of 1 to 13, wherein the electrodeposited species comprises one or more ceramic particles comprising Al₂O₃, SiO₂, TiN, BoN, Fe₂O₃, MgO, TiO₂, SiC, ZrC, CrC, and diamond.
15. The multilayer coating or cladding of any of 1 to 14, wherein the electrodeposited species comprises one or more of epoxy, polyurethane, polyaniline, polyethylene, poly ether ether ketone, polypropylene, and poly(3,4-ethylenedioxythiophene) poly(styrenesulfonate).
16. The multilayer coating or cladding of any of 1 to 15, wherein said multilayer coating or cladding is placed on or over a substrate comprising iron, carbon, copper, zinc, aluminum, titanium, nickel, chromium, graphite, cobalt, lead, epoxy, or composites or alloys thereof.
17. The multilayer coating or cladding of any of 1 to 16, wherein the layer thickness is between 2 nanometers and 10,000 nanometers.
18. The multilayer coating or cladding of any of 1 to 16, wherein the overall thickness of the coating is 2 micron to 200 microns.
19. The multilayer coating or cladding of any of 1 to 16, wherein the overall thickness of the coating is 200 microns to 5 millimeters.
20. The multilayer coating or cladding of any of 1 to 16, wherein the overall thickness of the coating is from 1 millimeters to 6.5 millimeters.
21. The multilayer coating or cladding of any of 1 to 16, wherein the overall thickness of the coating is greater than about 6.5 millimeters.
22. An electrodeposition method for producing the multilayer coating or cladding of any of 1-21, comprising:
   (a) placing a mandrel or a substrate to be coated in a first electrolyte containing one or more metal ions, ceramic particles, polymer particles, or a combination thereof; and
   (b) applying electric current and varying in time one or more of: the amplitude of the electrical current, electrolyte temperature, electrolyte additive concentration, or electrolyte agitation, in order to produce periodic layers of electrodeposited species or periodic layers of electrodeposited species microstructures; and
   (c) growing a multilayer coating under such conditions until the desired thickness of the multilayer coating is achieved.
23. The method of 22, further comprising after step (c), step (d) removing the mandrel or the substrate from the bath and rinsing.
24. The method of 22, wherein electrolyte agitation is achieved by ultrasonic agitation of the electrolyte.
25. The method of 22, wherein electrolyte agitation is achieved by agitating the mandrel or substrate.
26. The method in any of 22-25, wherein mandrel or substrate agitation is achieved by affecting periodic displacement of the mandrel or substrate.
27. An electrodeposition method for producing the multilayer coating or cladding, of any of 1-21, comprising:
   (a) placing a mandrel or substrate to be coated in a first electrolyte containing one or more metal ions, ceramic particles, polymer particles, or a combination thereof; and
   (b) applying electric current and varying in time one or more of: the electrical current, electrolyte temperature, electrolyte additive concentration, or electrolyte agitation, in order to produce periodic layers of electrodeposited species or periodic layers of electrodeposited species microstructures; and
   (c) growing a nanometer-thickness layer under such conditions; and
   (d) placing said mandrel or substrate to be coated in a second electrolyte containing one or more metal ions that is different from said first electrolyte, said second electrolyte containing metal ions, ceramic particles, polymer particles, or a combination thereof; and
   (e) repeating steps (a) through (d) until the desired thickness of the multilayer coating is achieved;
   wherein steps (a) through (d) are repeated at least two times.
28. The method of 27, further comprising after step (e), step (f) removing the mandrel or the coated substrate from the bath and rinsing.
29. The method of 27 or 28, wherein steps (a) through (d) are repeated at least three times.
30. The method of 27 or 28, wherein steps (a) through (d) are repeated at least five times.
31. The method of 27 or 28, wherein steps (a) through (d) are repeated at least 10 times.
32. The method of any of 22 to 31, wherein the metal ions are chosen from the list Ni, Zn, Fe, Cu, Au, Ag, Pd, Sn, Mn, Co, Pb, Al, Ti, Mg and Cr.
33. The method of any of 22 to 31, wherein the ceramic particles are chosen from Al₂O₃, SiO₂, TiN, BoN, Fe₂O₃, MgO, SiC, ZrC, CrC, diamond particulates, and TiO₂
34. The method of any of 22 to 31, wherein the polymer particles are chosen from epoxy, polyurethane, polyaniline, polyethylene, poly ether ether ketone, polypropylene, and poly(3,4-ethylenedioxythiophene) poly(styrenesulfonate).
35. The method of any of 22 to 34, wherein the electrolyte solvent is chosen from water, organic solvent, ionic liquid, molten salt or a combination thereof.
36. The method of any of 22 to 35, wherein the substrate is placed on or over a substrate comprising iron, carbon, copper, zinc, aluminum, titanium, nickel, chromium, graphite, carbon, cobalt, lead, epoxy, or composites or alloys thereof.
37. The method of any of 22 to 36, wherein the electric current density ranges between 0.5 mA/cm² and 500 mA/cm² based upon the surface area of the substrate or mandrel to be coated.
38. The method of any of 22 to 36, wherein the electric current density ranges between 100 mA/cm² and 2 A/cm² based upon the surface area of the substrate or mandrel to be coated.
39. The method of any of 22 to 36, wherein the electric current density is greater than about 500 mA/cm² based upon the surface area of the substrate or mandrel to be coated.
40. The method of any of 22 to 39, wherein the multilayer coating or cladding is between 2 nanometers and 10,000 nanometers.
41. The method of any of 22 to 39, wherein the multilayer coating or cladding is between 2 microns to 200 microns.
42. The method of any of 22 to 39, wherein the multilayer coating or cladding is between 200 microns to 5 millimeters.
43. The method of any of 22 to 39, wherein the multilayer coating or cladding is between 1 millimeters to 6.5 millimeters.
44. The method of any of 22 to 29, wherein the multilayer coating or cladding is between greater than about 6.5 millimeters.
45. The coating or cladding produced by the method of any one of 22 to 44.
46. The coating or cladding of any of 1 to 21 and 45, wherein said coating or cladding is corrosion-resistant.
47. An electrodeposited corrosion-resistant multilayer coating or cladding, comprising:
   multiple nanoscale layers that vary in electrodeposited species microstructure, which result in galvanic interactions occurring between the nanoscale layers.
48. An electrodeposited, corrosion-resistant multilayer coating or cladding, comprising:
   multiple nanoscale layers that vary in electrodeposited species, which result in galvanic interactions occurring between the nanoscale layers.
49. The electrodeposited, corrosion-resistant multilayer coating or cladding of 47 or 48, wherein said coating or cladding comprises greater than 10 nanoscale layers.
50. The electrodeposited, corrosion-resistant multilayer coating or cladding of 47 or 48, wherein said coating or cladding comprises greater than 100 nanoscale layers.
51. The electrodeposited, corrosion-resistant multilayer coating or cladding of 47 or 48, wherein said coating or cladding comprises greater than 500 nanoscale layers.
52. The electrodeposited, corrosion-resistant multilayer coating or cladding of 47 or 48, wherein said coating or cladding comprises greater than 1,000 nanoscale layers.
53. The electrodeposited, corrosion-resistant multilayer coating or cladding of 47 or 48, wherein said coating or cladding comprises greater than 5,000 nanoscale layers.
54. The electrodeposited, corrosion-resistant multilayer coating or cladding of 47 or 48, wherein said coating or cladding comprises greater than 10,000 nanoscale layers.
55. The coating or cladding of any of 1 to 21 or 45 to 54, wherein said coating or cladding is resistant to corrosion due to oxidation, reduction, stress, dissolution, dezincification, acid, base, sulfidation or friction.
56. A coating or cladding, comprising:
   a plurality of alternating first and second layers each having electrodeposited species or electrodeposited species microstructures, the first layers having a first reactivity and the second layers having a second reactivity, wherein the first reactivity and the second reactivity define galvanic interactions between the first layers and the second layers.
57. The coating or cladding of 56, wherein the first reactivity is defined by at least one of the following layer properties: a nobility of the first layers, an electronegativity of the first layers, a thickness of the first layers, an interfacing surface of the first layers, a material of the first layers, and a material concentration of the first layers.
58. The coating or cladding of 56, wherein the second reactivity is defined by at least one of the following layer properties: a nobility of the second layers, an electronegativity of the second layers, a thickness of the second layers, an interfacing surface of the second layers, a material of the second layers, and a material concentration of the second layers.
59. The coating or cladding of 56, wherein the galvanic interactions are defined by at least one of the following layer properties: a nobility of the first or second layers, an electronegativity of the first or second layers, a thickness of the first or second layers, an interfacing surface of the first or second layers, a material of the first or second layers, and a material concentration of the first or second layers.
60. The coating or cladding of 56, wherein the first reactivity differs from the second reactivity by a difference in at least one of the following layer properties: layer nobility, layer electronegativity, layer thickness, layer interfacing surface, layer material, and layer material concentration.
61. The coating or cladding of 56 further comprising a substrate disposed proximate to at least one of the first layers or at least one of the second layers, the substrate having a substrate reactivity, wherein the substrate reactivity differs from the first reactivity or the second reactivity to define another galvanic interaction between the substrate and the first or second layers.
62. The coating or cladding of 61, wherein the first reactivity is less than the second reactivity and less than the substrate reactivity.
63. The coating or cladding of 61, wherein the first reactivity is greater than the second reactivity and greater than the substrate reactivity.
64. The coating or cladding of 61, wherein the substrate reactivity is greater than the first reactivity and greater than the second reactivity.
65. The coating or cladding of 61, wherein the substrate reactivity is less than the first reactivity and less than the second reactivity.
66. The coating or cladding of 61, wherein the substrate reactivity is less than the first reactivity and greater than the second reactivity.
67. The coating or cladding of any of 61 to 66, wherein a surface of at least one of the first layers abuts a surface of at least one of the second layers.
68. The coating or cladding of any of 61 to 66, wherein a diffuse interface layer is disposed between at least one of the first layers and at least one of the second layers, the diffuse interface layer comprising a blend of the at least one first and second layers.
69. The coating or cladding of any of 61 to 66, wherein at least one of the first layers abuts at least one of the second layers, and wherein a diffuse interface layer is disposed between another one of the first layers and another one of the second layers, the diffuse interface layer comprising a blend of the another one of the first and second layers.
70. The coating or cladding of any of 61 to 69, wherein the first or second layers comprise one or more of Ni, Zn, Fe, Cu, Au, Ag, Pd, Sn, Mn, Co, Pb, Al, Ti, Mg, and Cr.
71. The coating or cladding of any of 61 to 69, wherein the first or second layers comprise one or more ceramic particles comprising Al₂O₃, SiO₂, TiN, BoN, Fe₂O₃, MgO, TiO₂, SiC, ZrC, CrC, and diamond.
72. The coating or cladding of any of 61 to 69, wherein the first or second layers comprise one or more of epoxy, polyurethane, polyaniline, polyethylene, poly ether ether ketone, polypropylene, and poly(3,4-ethylenedioxythiophene) poly(styrenesulfonate).
73. The coating or cladding of any of 61 to 72, wherein the coating or cladding is disposed on or over a substrate comprising iron, carbon, copper, zinc, aluminum, titanium, nickel, chromium, graphite, cobalt, lead, epoxy, or composites or alloys thereof.
74. The coating or cladding of any of 61 to 73, wherein a thickness of at least one of the first or second layers is between 2 nanometers and 10,000 nanometers.
75. The coating or cladding of any of 61 to 74, wherein an overall thickness of the coating or cladding is 2 microns to 200 microns.
76. The coating or cladding of any of 61 to 74, wherein an overall thickness of the coating or cladding is 200 microns to 5 millimeters.
77. The coating or cladding of any of 61 to 74, wherein an overall thickness of the coating or cladding is from 1 millimeter to 6.5 millimeters.
78. The coating or cladding of any of 61 to 74, wherein an overall thickness of the coating or cladding is greater than about 6.5 millimeters.
79. An electrodeposition method, comprising:
   repeatedly disposing a first layer proximate to a second layer to form a plurality of alternating first and second layers each having electrodeposited species or electrodeposited species microstructures, the first layers having a first reactivity and the second layers having a second reactivity, wherein the first reactivity and the second reactivity define galvanic interactions between the first layers and the second layers.
80. An electrodeposition method, comprising:
   disposing a first layer of an electrodeposited species or electrodeposited species microstructures on a substrate or mandrel, the first layer having a first reactivity;
   disposing a second layer of an electrodeposited species or electrodeposited species microstructures proximate to the first layer, the second layer having a second reactivity defining a galvanic interaction with the first layer;
   disposing another first layer proximate to the second layer, the another first layer having the first reactivity and defining another galvanic interaction with the second layer; and
   disposing another second layer proximate to the another first layer, the another second layer having the second reactivity and defining yet another galvanic interaction with the another first layer.
81. The electrodeposition method of 80, further comprising
   disposing the substrate or mandrel in an electrolyte containing one or more metal ions, ceramic particles, and polymer particles; and
   applying electric current and varying in time one or more of: an amplitude of the electrical current, an electrolyte temperature, an electrolyte additive concentration, and an electrolyte agitation.
82. The electrodeposition method of 81, wherein the electrolyte agitation includes ultrasonic agitation of the electrolyte.
83. The electrodeposition method of 81, wherein the electrolyte agitation includes agitating the substrate or mandrel.
84. The electrodeposition method of 83, wherein the substrate or mandrel agitation includes periodic displacement of the substrate or mandrel.
85. An electrodeposition method, comprising:
   placing a substrate or mandrel in a first electrolyte containing one or more metal ions, ceramic particles, and polymer particles;
   applying a first electric current and varying in time one or more of: the first electrical current, a first electrolyte temperature, a first electrolyte additive concentration, and a first electrolyte agitation;
   disposing a first layer of electrodeposited species or electrodeposited species microstructures on the substrate or mandrel, the first layer having a first reactivity;
   placing the substrate or mandrel in a second electrolyte containing one or more metal ions, ceramic particles, and polymer particles, the second electrolyte differing from the first electrolyte;
   applying a second electric current and varying in time one or more of: the second electrical current, an second electrolyte temperature, a second electrolyte additive concentration, and a second electrolyte agitation;
   disposing a second layer of electrodeposited species or electrodeposited species microstructures on the first layer, the second layer having a second reactivity wherein the first reactivity differs from the second reactivity to define a galvanic interaction between the first layer and the second layer; and
   repeating the disposition of alternating first and second layers to form a nanometer-thickness multilayer coating or cladding.
86. The method of 85, wherein the repeating is conducted at least three times.
87. The method of 85, wherein the repeating is conducted at least five times.
88. The method of 85, wherein the repeating is conducted at least ten times.
89. The method of any of 79 to 88, wherein the metal ions include at least one of: Ni, Zn, Fe, Cu, Au, Ag, Pd, Sn, Mn, Co, Pb, Al, Ti, Mg, and Cr.
90. The method of any of 79 to 88, wherein the ceramic particles include at least one of: Al₂O₃, SiO₂, TiN, BoN, Fe₂O₃, MgO, SiC, ZrC, CrC, diamond particulates, and TiO₂,
91. The method of any of 79 to 88, wherein the polymer particles include at least one of: epoxy, polyurethane, polyaniline, polyethylene, poly ether ether ketone, polypropylene, and poly(3,4-ethylenedioxythiophene) poly(styrenesulfonate).
92. The method of any of : 79 to 88, wherein the first or second electrolyte includes one or more of: water, organic solvent, ionic liquid, and molten salt.
93. The method of any of 79 to 88, wherein the substrate comprising at least one of: iron, carbon, copper, zinc, aluminum, titanium, nickel, chromium, graphite, carbon, cobalt, lead, epoxy, and composites or alloys thereof.
94. The method of any of 79 to 88, wherein an electric current density ranges between 0.5 mA/cm² and 500 mA/cm² varying according to a surface area of the substrate or mandrel.
95. The method of any of 79 to 88, wherein an electric current density ranges between 100 mA/cm² and 2 A/cm² varying according to a surface area of the substrate or mandrel.
96. The method of any of 79 to 88, wherein an electric current density is greater than about 500 mA/cm².
97. The method of any of 79 to 88, wherein the multilayer coating or cladding includes a thickness of between 2 nanometers and 10,000 nanometers.
98. The method of any of 79 to 88, wherein the multilayer coating or cladding includes a thickness of between 2 micron to 200 microns.
99. The method of any of 79 to 88, wherein the multilayer coating or cladding includes a thickness between 200 microns to 5 millimeters.
100. The method of any of 79 to 88, wherein the multilayer coating or cladding includes a thickness between 1 mm to 6.5 millimeters.
101. The method of any of 79 to 88, wherein the multilayer coating or cladding includes a thickness between greater than about 6.5 millimeters.
102. The method or coating or cladding of any of the above , wherein the galvanic interactions between layers of the coating or cladding are defined by a galvanic potential of about 0.00001 volts to 1.5 volts.
103. The method or coating or cladding of any of the above , wherein the galvanic interactions between layers of the coating or cladding are defined by a galvanic potential of about 0.00002 volts to about 1.25 volts.
104. The method or coating or cladding of any of the above , wherein the galvanic interactions between layers of the coating or cladding are defined by a galvanic potential of about 0.00005 volts to about 0.005 volts.
105. The method, or coating or cladding, of any of the above , wherein the galvanic interactions between layers of the coating or cladding are defined by a galvanic potential of about 0.1 volts to about 1.12 volts.
106. The method, or coating or cladding, of any of the above , wherein the galvanic interactions between layers of the coating or cladding are defined by a galvanic potential of about 0.15 volts to about 0.8 volts.
107. The method or coating or cladding of any of the above , wherein the galvanic interactions between the substrate or mandrel and the layers of the coating or cladding are defined by a galvanic potential of about 0.00001 volts to 1.5 volts.
108. The method or coating or cladding of any of the above , wherein the galvanic interactions between the substrate or mandrel and the layers of the coating or cladding are defined by a galvanic potential of about 0.5 volts to about 1.25 volts.
109. The method or coating or cladding of any of the above , wherein the galvanic interactions between the substrate or mandrel and the layers of the coating or cladding are defined by a galvanic potential of about 0.00005 volts to about 0.005 volts.
110. The method, or coating or cladding, of any of the above , wherein the galvanic interactions between the substrate or mandrel and the layers of the coating or cladding are defined by a galvanic potential of about 0.1 volts to about 1.12 volts.
111. The method, or coating or cladding, of any of the above , wherein the galvanic interactions between the substrate or mandrel and the layers of the coating or cladding are defined by a galvanic potential of about 0.15 volts to about 0.8 volts.
112. The method, or coating or cladding of any of 14, 33, 71, and 90, wherein said coating or cladding comprise said particles in a range selected from: 0 to 5 percent, 5 to 10 percent, 10 to 20 percent, 20 to 30 percent, 30 to 40 percent, or 40 to 50 percent on a volume basis.

## Claims

1. An electrodeposition method for producing a corrosion resistant multilayer coating or cladding for protecting a substrate from corrosion caused by oxidation or reduction, comprising:
a) placing a mandrel or a substrate to be coated in a first electrolyte containing zinc ions and one or more of: Fe ions, Mn ions, Ti ions, Mg ions, Ni ions, ceramic particles, polymer particles, or a combination thereof;
b) applying electric current and varying in time one or more of: the amplitude of the electrical current, electrolyte temperature, electrolyte additive concentration, or electrolyte agitation, in order to produce multiple nanoscale layers that periodically vary in electrodeposited species or electrodeposited species microstructures, wherein variations in said nanoscale layers of said electrodeposited species or electrodeposited species microstructure result in galvanic interactions between the layers; and
c) growing a multilayer coating under such conditions until the desired thickness of the multilayer coating is achieved; and
wherein said nanoscale layers are continuous layers that are all less noble than the substrate; and
wherein the layer thickness of at least one of the nanoscale layers of alloys is selected from the group consisting of between 5 and 25 nanometers, 25 nanometers and 100 nanometers, and between 100 nanometers and 400 nanometers.

2. The method of claim 1, wherein all of the layers that periodically vary comprise Zn and Fe; or wherein all of the layers that periodically vary comprise Zn and Ni.

3. The process according to any preceding claim, wherein the layer thickness of the nanoscale layers is selected from the group consisting of 25 to 100 nanometers, 100 to 300 nanometers, and 100 to 400 nanometers.

4. The process according to any preceding claim, wherein the thickness of the coating or cladding is selected from the group consisting of, from 1 to 10 microns, from 5 to 50 microns, from 20 to 200 microns, from 200 microns to 2 mm, from 400 microns to 4 mm, from 200 microns to 5 mm, from 1 mm to 6.5 mm, from 5 mm to 12.5 mm, from 10 mm to 20 mm, and from 15 mm to 30 mm.

5. The process according to any preceding claim wherein the electrodeposited species comprises one or more additional metals selected from Ni, Cu, Au, Ag, Pd, Sn, Mn, Co, Pb, Al, Ti, Mg, and Cr, and/or wherein the electrodeposited species optionally comprises one or more ceramic particles comprising Al₂O₃, SiO₂, TiN, BN, Fe₂O₃, MgO, TiO₂, SiC, ZrC, CrC, and diamond.

6. An electrodeposited, corrosion-resistant multilayer coating or cladding prepared according to the method of any preceding claim having interfaces between the nanoscale layers.

7. The electrodeposited corrosion-resistant multilayer coating or cladding according to claim 6, where the electrodeposited species optionally comprises one or more additional metals selected from Ni, Cu, Au, Ag, Pd, Sn, Mn, Co, Pb, Al, Ti, Mg, and Cr.

8. The electrodeposited corrosion-resistant multilayer coating or cladding according to claim 6 or claim 7, where the electrodeposited species optionally comprises one or more ceramic particles selected from the group consisting of Al₂O₃, SiO₂, TiN, BN, Fe₂O₃, MgO, TiO₂, SiC, ZrC, CrC, and diamond.

9. The electrodeposited corrosion-resistant multilayer coating or cladding according to any of claims 6-8, wherein the coating or cladding is deposited on a substrate comprising iron, carbon, copper, zinc, aluminum, titanium, nickel, chromium, graphite, carbon, cobalt, lead, epoxy, or composites thereof or alloys thereof.

10. The electrodeposited, corrosion-resistant multilayer coating or cladding according to claim 9, wherein said nanoscale layers are less noble than the mandrel or said substrate.

11. The electrodeposited, corrosion-resistant multilayer coating or cladding according to claim 10, wherein said substrate comprises iron.

12. The electrodeposited, corrosion-resistant multilayer coating or cladding according to claim 11, deposited on an iron-based substrate that shows no red rust when exposed to a corrosive environment according to ASTM B117 for 300 hours.

13. The electrodeposited, corrosion-resistant multilayer coating or cladding of any of claims 6-12, comprising 3 or more non-identical layers that are repeatedly applied 50 or more times.

14. The electrodeposited, corrosion-resistant multilayer coating or cladding of any of claims 6-12, comprising 2 or more non-identical layers that are repeatedly applied 50 or more times.

15. The electrodeposited, corrosion-resistant multilayer coating or cladding of any of claims 6-14, wherein the interface is a diffuse region between the layers of 1-5 or 5-25 nanometers.

16. A method of protecting a substrate from corrosion caused by oxidation or reduction comprising applying a coating of any of claims 6-15 to a substrate, wherein said substrate is selected from iron, steel carbon, copper, zinc, aluminum, titanium, nickel, chromium, graphite, carbon, cobalt, lead, epoxy, or composites or alloys thereof.
